# EUROPEAN PATENT APPLICATION

(11) **EP 4 775 844 A1**
(43) Date of publication of application: **15.07.2026**
(21) Application number: 26150607.5
(22) Date of filing: 07.01.2026
(51) Int. Cl.: F16C 33/58, F16C 33/64

(54) **ROLLER BEARING COMPLIANT RACEWAY UNDERCUT**

(30) Priority: 08.01.2025 US 202519013550
(71) Applicant: Pratt & Whitney Canada Corp., (01BE5) Longueuil, QC J4G 1A1 (CA)
(72) Inventor: LACHANCE, Dominic, (01BE5) Longueuil, J4G 1A1 (CA); MARLEAU-FINLEY, Julien, (01BE5) Longueuil, J4G 1A1 (CA)
(74) Representative: Dehns

(57) **Abstract**

A roller bearing (201) is provided and includes an outer race (210), an inner race (220) and a roller element (230) radially interposed between the outer race and the inner race. The inner race includes outer portions having axially facing surfaces to contact axially facing surfaces of the roller element and a central portion disposed between the outer portions and having a raceway to contact a raceway facing surface of the roller element under normal operating loads of the roller bearing. The raceway has a side proximate to one of the axially facing surfaces of the outer portions to contact the raceway facing surface of the roller element under ultimate operating loads of the roller bearing. The side of the raceway includes a raceway undercut with a compliant geometry deformable by contact with the raceway facing surface of the roller element under the ultimate operating loads.

## Description

### BACKGROUND

The present disclosure relates to roller bearings for use in gas turbine engines of aircraft for example and, in particular, to a roller bearing with a compliant raceway undercut.

In gas turbine engines, such as those provided for use in aircraft, a highspeed rotating shaft may be supported by a bearing or a roller bearing. A roller bearing carries a load by having roller elements, such as balls, cylinders and/or cones, interposed between two concentric, grooved rings. The two concentric, grooved rings can be referred to generally as races. Often, in a gas turbine engine, the races include an inner race and an outer race with the roller elements interposed radially between the inner race and the outer race. Relative motion of the races causes the roller elements to roll with very little rolling resistance and with little sliding.

### SUMMARY

According to an aspect of the present invention, a roller bearing is provided and includes an outer race, an inner race and a roller element radially interposed between the outer race and the inner race. The inner race includes outer portions having axially facing surfaces to contact axially facing surfaces of the roller element and a central portion disposed between the outer portions and having a raceway to contact a raceway facing surface of the roller element under normal operating loads of the roller bearing. The raceway has a side proximate to one of the axially facing surfaces of the outer portions to contact the raceway facing surface of the roller element under ultimate (e.g., maximum) operating loads of the roller bearing, such as during a rotor blade release in a gas turbine engine of an aircraft. The side of the raceway includes a raceway undercut with a compliant geometry deformable by contact with the raceway facing surface of the roller element under the ultimate operating loads.

In an embodiment of the above, the outer portions and the central portion of the inner race are integrally formed as a monolithic unitary body.

In an embodiment according to any of the previous embodiments, the raceway has first and second opposite sides (of which the said side of the raceway is one), each of which is proximate to a corresponding one of the axially facing surfaces of a corresponding one of the outer portions, and each of the first and second opposite sides includes the raceway undercut with the compliant geometry deformable by the contact with the raceway facing surface of the roller element under the ultimate operating loads.

In an embodiment according to any of the previous embodiments, the compliant geometry is a square geometry.

In an embodiment according to any of the previous embodiments, the square geometry is characterized in that the raceway includes at the side thereof a first raceway portion facing the raceway facing surface of the roller element and a second raceway portion extending from the first raceway portion to the raceway facing surface of the roller element and forming a right angle or up to a right angle with the first raceway portion, and wherein a material of the raceway is softer than a material of the raceway facing surface of the roller element.

In an embodiment according to any of the previous embodiments, the compliant geometry is a winglet geometry.

In an embodiment according to any of the previous embodiments, the winglet geometry is characterized in that the raceway includes at the side thereof a first raceway portion facing the raceway facing surface of the roller element and a second raceway portion extending from the first raceway portion to the raceway facing surface of the roller element and having a section forming an acute angle with the first raceway portion, and wherein a material of the raceway is softer than a material of the raceway facing surface of the roller element.

According to an aspect of the present invention, a roller bearing is provided and includes an outer race, a multi-part inner race and a roller element radially interposed between the outer race and the multi-part inner race. The multi-part inner race includes outer portions having axially facing surfaces to contact axially facing surfaces of the roller element and a central portion disposed between the outer portions and having a raceway to contact a raceway facing surface of the roller element under normal operating loads of the roller bearing. The raceway has a side proximate to one of the axially facing surfaces of the outer portions to contact the raceway facing surface of the roller element under ultimate (e.g., maximum) operating loads of the roller bearing, such as during a rotor blade release in a gas turbine engine of an aircraft. The side of the raceway includes a raceway undercut with a compliant geometry deformable by the contact with the raceway facing surface of the roller element under the ultimate operating loads.

In an embodiment of the above, the outer portions and the central portion of the multi-part inner race are formed separately and affixed together.

In an embodiment according to any of the previous embodiments, the raceway has first and second opposite sides, each of which is proximate to a corresponding one of the axially facing surfaces of a corresponding one of the outer portions, and each of the first and second opposite sides includes the raceway undercut with the compliant geometry deformable by the contact with the raceway facing surface of the roller element under the ultimate operating loads.

In an embodiment according to any of the previous embodiments, the compliant geometry is a square geometry.

In an embodiment according to any of the previous embodiments, the square geometry is characterized in that the raceway includes at the side thereof a first raceway portion facing the raceway facing surface of the roller element and a second raceway portion extending from the first raceway portion to the raceway facing surface of the roller element and forming a right angle or up to a right angle with the first raceway portion, and wherein a material of the raceway is softer than a material of the raceway facing surface of the roller element.

In an embodiment according to any of the previous embodiments, the compliant geometry is a winglet geometry.

In an embodiment according to any of the previous embodiments, the winglet geometry is characterized in that the raceway includes at the side thereof a first raceway portion facing the raceway facing surface of the roller element and a second raceway portion extending from the first raceway portion to the raceway facing surface of the roller element and having a section forming an acute angle with the first raceway portion, and wherein a material of the raceway is softer than a material of the raceway facing surface of the roller element.

According to an aspect of the present invention, a roller bearing assembly method is provided and includes manufacturing outer portions of a multi-part inner race to have axially facing surfaces to contact axially facing surfaces of a roller element and manufacturing a central portion of the multi-part inner race to have a raceway to contact a raceway facing surface of the roller element under normal operating loads of the roller bearing and such that the raceway has a side proximate to one of the axially facing surfaces of the outer portions to contact the raceway facing surface of the roller element under ultimate (e.g., maximum) operating loads of the roller bearing, such as during a rotor blade release in a gas turbine engine of an aircraft, and the side of the raceway includes a raceway undercut with a compliant geometry deformable by the contact with the raceway facing surface of the roller element under the ultimate operating loads.

In an embodiment of the above, the method further includes arranging a first one of the outer portions on a shaft, the central portion on the shaft and a second one of the outer portions on the shaft, affixing the outer portions and the central portion together to form the multi-part inner race and radially interposing the roller element between the multi-part inner race and an outer race.

In an embodiment according to any of the previous embodiments, the affixing of the outer portions and the central portion together includes at least one of fastening and metallurgical bonding.

In an embodiment according to any of the previous embodiments, at least the manufacturing of the central portion includes machining the raceway undercut with the compliant geometry.

In an embodiment according to any of the previous embodiments, the compliant geometry is a square geometry and the machining of the raceway undercut with the compliant geometry includes at the side thereof machining a first raceway portion facing the raceway facing surface of the roller element and machining a second raceway portion extending from the first raceway portion to the raceway facing surface of the roller element and forming a right angle or up to a right angle with the first raceway portion, and wherein a material of the raceway is softer than a material of the raceway facing surface of the roller element.

In an embodiment according to any of the previous embodiments, the compliant geometry is a winglet geometry and the machining of the raceway undercut with the compliant geometry includes at the side thereof machining a first raceway portion facing the raceway facing surface of the roller element and machining a second raceway portion extending from the first raceway portion to the raceway facing surface of the roller element and having a section forming an acute angle with the first raceway portion, and wherein a material of the raceway is softer than a material of the raceway facing surface of the roller element.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a cross-sectional view of a prior art turboshaft engine;
FIG. 2 is a perspective view of a roller bearing in accordance with embodiments;
FIG. 3 is a perspective cutaway view of the roller bearing of FIG. 2 in accordance with embodiments;
FIGS. 4A and 4B are side and enlarged side views, respectively, of the portion of the roller bearing of FIG. 3 enclosed by line 3-3 and illustrating a monolithic and unitary inner race with a square geometry of a raceway undercut in accordance with embodiments;
FIGS. 5A and 5B are side and enlarged side views, respectively, of the portion of the roller bearing of FIG. 3 enclosed by line 3-3 and illustrating a monolithic and unitary inner race with a winglet geometry of a raceway undercut in accordance with embodiments;
FIGS. 6A and 6B are side and enlarged side views, respectively, of the portion of the roller bearing of FIG. 3 enclosed by line 3-3 and illustrating a multi-part inner race with a square geometry of a raceway undercut in accordance with embodiments;
FIGS. 7A and 7B are side and enlarged side views, respectively, of the portion of the roller bearing of FIG. 3 enclosed by line 3-3 and illustrating a multi-part inner race with a winglet geometry of a raceway undercut in accordance with embodiments;
FIG. 8 is a flow diagram illustrating a roller bearing assembly method in accordance with embodiments; and
FIG. 9 is a graphical illustration of peak stresses of an inner race having various raceway undercut geometries in accordance with embodiments.

### DETAILED DESCRIPTION

The following disclosure is applicable to any type of gas turbine engine, including, but not limited to, turbofans, turboshafts, turboprops, turbojets, electrical drives, hybrid drives, etc. The gas turbine engine described below is provided by way of example, and should not be interpreted as limiting the scope of the application or the claims in any way.

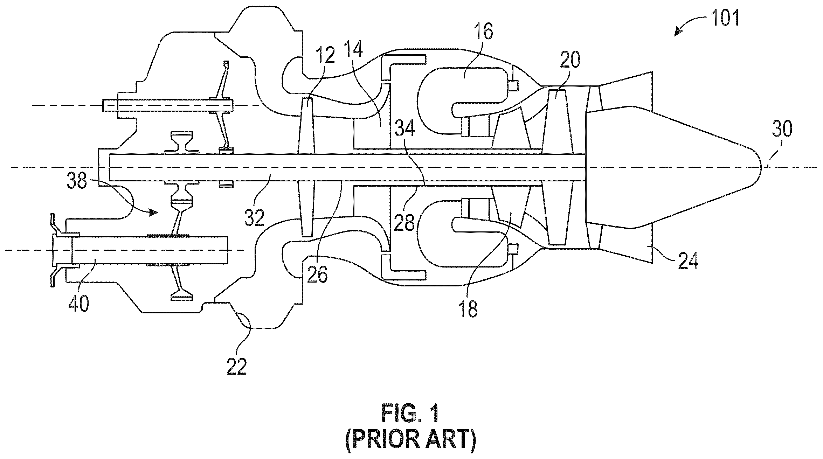

With reference to FIG. 1, a turboshaft engine 101 is provided and configured as a gas turbine engine. In particular, the turboshaft engine 101 is a generally conventional turboshaft engine generally including, in serial flow communication, a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14 and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The turboshaft engine 101 has multiple, i.e. two or more, spools which may perform the compression to pressurize the air received through an air inlet 22, and which extract energy from the combustion gases before they exit via an exhaust outlet 24. For example, the turboshaft engine 101 can include a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The turboshaft engine 101 may further include a transmission 38 driven by the low pressure shaft 32 and driving a rotatable output shaft 40. The transmission 38 may vary a ratio between rotational speeds of the low pressure shaft 32 and the output shaft 40.

The turboshaft engine 101 can also include one or more roller bearings to support at least the low pressure shaft 32 and the high pressure shaft 34. The roller bearings in these or other cases are often subject to certain loads in operation and techniques can be used to help increase bearing capacities of roller bearings to meet and exceed the requirements of withstanding those certain loads. In some cases, a technique has been to increase contact area between a raceway and roller elements of a roller bearing. The increased contact area leads to loads being shared across larger surfaces with corresponding reductions in contact pressures.

It has been found however that for ultimate load cases, such as a case of a rotor blade release in a gas turbine engine of an aircraft, a roller bearing must be able to sustain excessive loads for a short duration and survive the event. **If** the roller bearing was properly designed for a normal load application, the ultimate load will become problematic because the contact area will become so large that it will reach the end of the raceway. The end of the raceway can be referred to as a raceway undercut and is formed as a result of raceway manufacturing processes. Contact up to the raceway undercut is to be avoided because such contact will increase local contact stresses significantly and could cause instant failure of the roller elements.

A need therefore exists for an improved roller bearing for use in gas turbine engines of aircrafts for example, where the improved roller bearing exhibits reduced contact stresses at the raceway undercut.

Thus, as will be described below, a roller bearing is provided for use in a gas turbine engine of an aircraft for example. The roller bearing includes a raceway undercut with a compliant geometry that significantly reduces contact stress at the raceway undercut. The significantly reduced contact stress leads to reductions in stress concentrations and protects the roller bearing during ultimate load cases and also keeps the most optimal contact area of the roller bearing in normal operation.

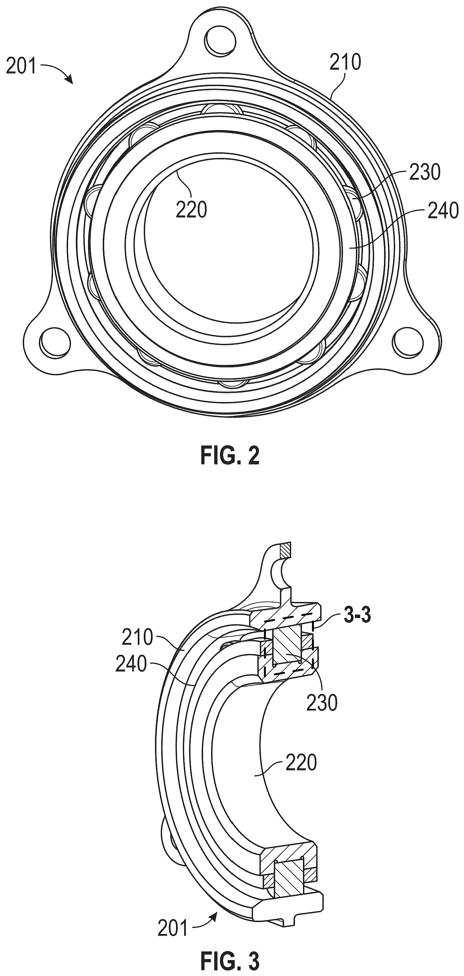

With reference to FIGS. 2 and 3, a roller bearing 201 is provided for use with at least the low pressure shaft 32 and the high pressure shaft 34 of the turboshaft engine 101 of FIG. 1. During operational conditions, the roller bearing 201 can be subject to normal operating loads and, in some cases, ultimate operating loads that exceed the normal operating loads. The roller bearing 201 is thus designed to withstand the ultimate operating loads. The roller bearing 201 includes an outer race 210, an inner race 220, a roller element 230 radially interposed between the outer race 210 and the inner race 220 and a cage 240 to secure the roller element 230 in place. It is to be understood that the roller 230 can be provided as multiple roller elements 230. For purposes of clarity and brevity, however, the following description will refer to the roller element 230 in singular form.

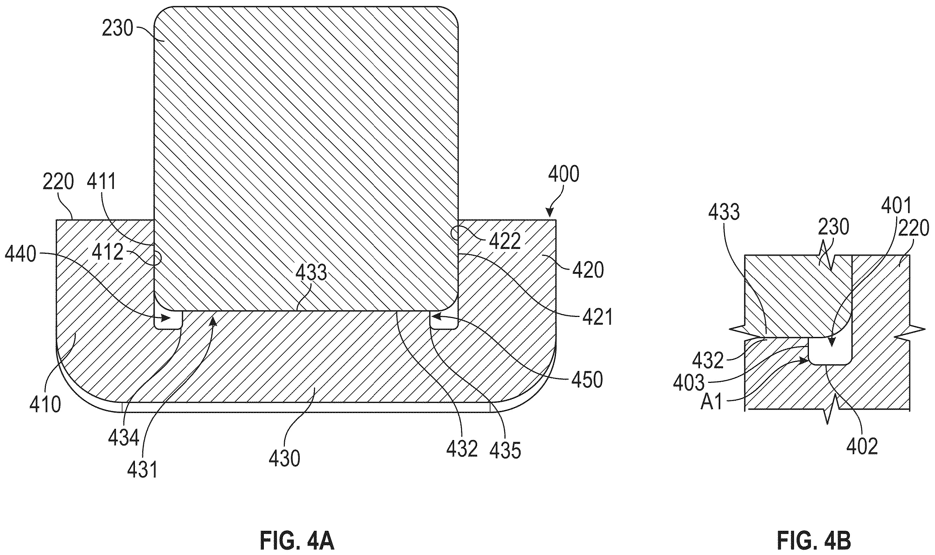

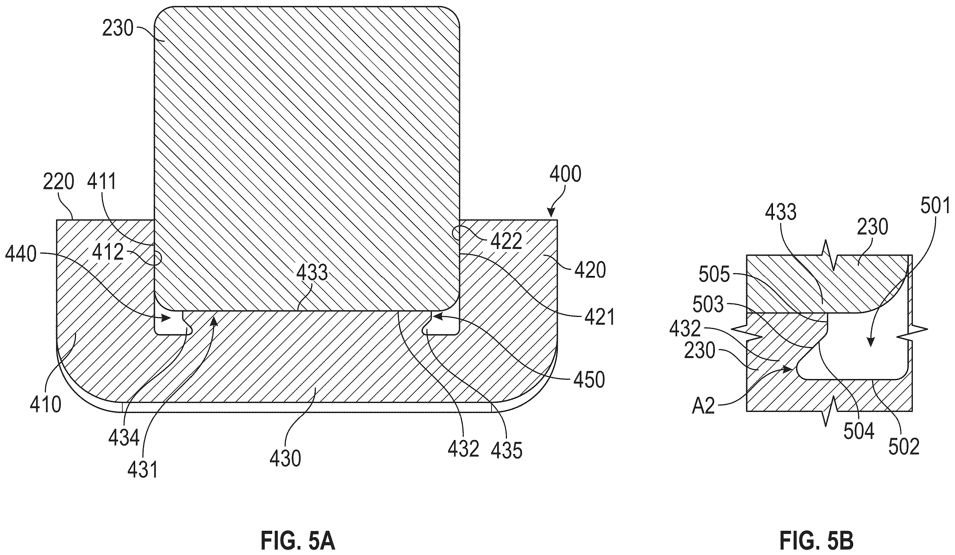

With continued reference to FIGS. 2 and 3 and with additional reference to FIGS. 4A and 4B and to FIGS. 5A and 5B, the inner race 220 can include a first outer portion 410, a second outer portion 420 and a central portion 430. The first outer portion 410 has an axially facing surface 411 to contact a corresponding axially facing surface 412 of the roller element 230. The second outer portion 420 has an axially facing surface 421 to contact a corresponding axially facing surface 422 of the roller element 230. The central portion 430 is disposed between the first outer portion 410 and the second outer portion 420. The central portion 430 has a raceway 431. The raceway 431 has a center section 432 to contact a center section of a raceway facing surface 433 of the roller element 230 under the normal operating loads of the roller bearing 201. The raceway 431 also has a first side 434 and a second side 435 at opposite sides of the center section 432. The first side 434 is proximate to the axially facing surface 411 of the first outer portion 410 to contact the raceway facing surface 433 of the roller element 230 under the ultimate operating loads of the roller bearing 201 and includes a first raceway undercut 440 with a compliant geometry that is deformable by the contact with the raceway facing surface 433 of the roller element 230 under the ultimate operating loads. The second side 435 is proximate to the axially facing surface 421 of the second outer portion 420 to contact the raceway facing surface 433 of the roller element 230 under the ultimate operating loads of the roller bearing 201 and includes a second raceway undercut 450 with a compliant geometry that is deformable by the contact with the raceway facing surface 433 of the roller element 230 under the ultimate operating loads.

It is to be understood that the raceway 431 can be selected to have a characteristic hardness which is less than a characteristic hardness of the raceway facing surface 433 of the roller element 230. That is, a material of the raceway 431 can be selected to be softer than a material of the raceway facing surface 433 of the roller element 230. This difference in relative softness between the material of the raceway 431 and the material of the raceway facing surface 433 of the roller element 230 facilitates the compliant geometry of the first raceway undercut 440 being deformable as described above and facilitates the compliant geometry of the second raceway undercut 450 being deformable as described above. The following description will generally relate to cases in which the material of the raceway 431 is selected to be softer than the material of the raceway facing surface 433 of the roller element 230.

While FIGS. 4A and 4B and to FIGS. 5A and 5B illustrate the raceway 431 as having the first side 434 including the first raceway undercut 440 with the compliant geometry and as having the second side 435 including the second raceway undercut 450 with the compliant geometry, it is to be understood that other embodiments are possible. For example, the raceway 431 can be provided with only the first side 434 including the first raceway undercut 440 with the compliant geometry or with only the second side 435 including the second raceway undercut 450 with the compliant geometry. As another example, the compliant geometry of the first raceway undercut 440 need not match or be similar to the compliant geometry of the second raceway undercut 450. In any event, for purposes of clarity and brevity, the following description will relate to the case in which the raceway 431 has the first side 434 including the first raceway undercut 440 with the compliant geometry and has the second side 435 including the second raceway undercut 450 with the compliant geometry and in which the compliant geometries of the first raceway undercut 440 and the second raceway undercut 450 match or are similar.

As shown in FIGS. 4A and 4B, the compliant geometries of the first raceway undercut 440 and the second raceway undercut 450 can be provided as a square geometry 401 (see FIG. 4B) or as a nearly square geometry (as used herein, the phrase "square geometry" can refer to a geometry with a right angle or to a geometry with an angle that is nearly 90°, such as ~85°-89.99°). In accordance with one or more additional and/or alternative embodiments, the square geometry 401 can be characterized in that the raceway 431 includes a first raceway portion 402 and a second raceway portion 403 at each of the first side 434 and at the second side 435. The first raceway portion 402 is recessed from the center section 432 and faces a corresponding outer section of the raceway facing surface 433 of the roller element 230. The second raceway portion 403 extends from the first raceway portion 402 to the raceway facing surface 433 of the roller element 230 and forms a right angle A1 or an angle that is nearly a right angle with the first raceway portion 402.

As shown in FIGS. 5A and 5B, the compliant geometries of the first raceway undercut 440 and the second raceway undercut 450 can be provided as a winglet geometry 501 (see FIG. 5B). In accordance with one or more additional and/or alternative embodiments, the winglet geometry 501 can be characterized in that the raceway 431 includes a first raceway portion 502 and a second raceway portion 503 at each of the first side 434 and at the second side 435. The first raceway portion 502 is recessed from the center section 432 and faces a corresponding outer section of the raceway facing surface 433 of the roller element 230. The second raceway portion 503 extends from the first raceway portion 502 to the raceway facing surface 433 of the roller element 230 and has a first partial section 504 that forms an acute angle A2 with the first raceway portion 402. The first partial section 504 can extend to the raceway facing surface 433 of the roller element 230 or, as shown in FIG. 5B, can be paired with a second partial section 505 that extends to the raceway facing surface 433.

The first outer portion 410, the second outer portion 420 and the central portion 430 can be integrally formed as a monolithic unitary body 400. This can be achieved by various manufacturing processes including, but not limited to, machining and additive manufacturing.

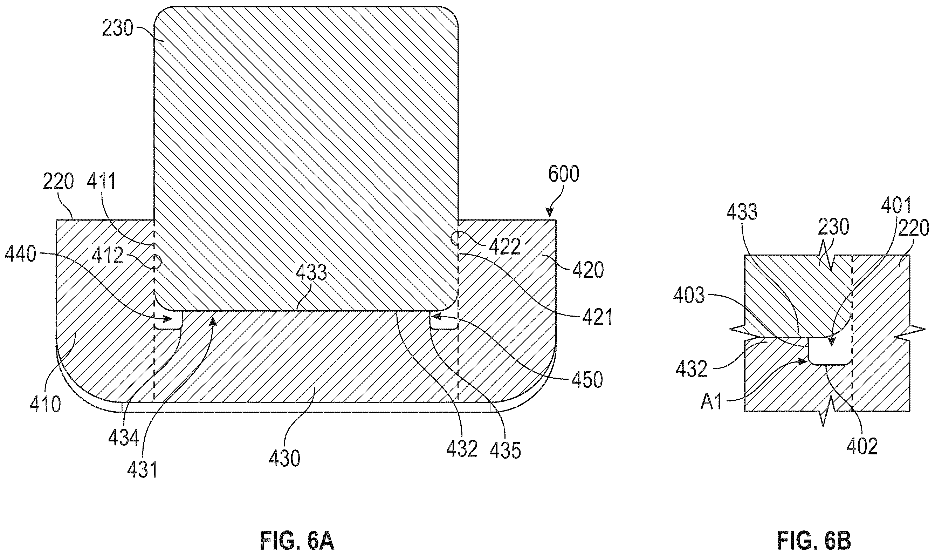

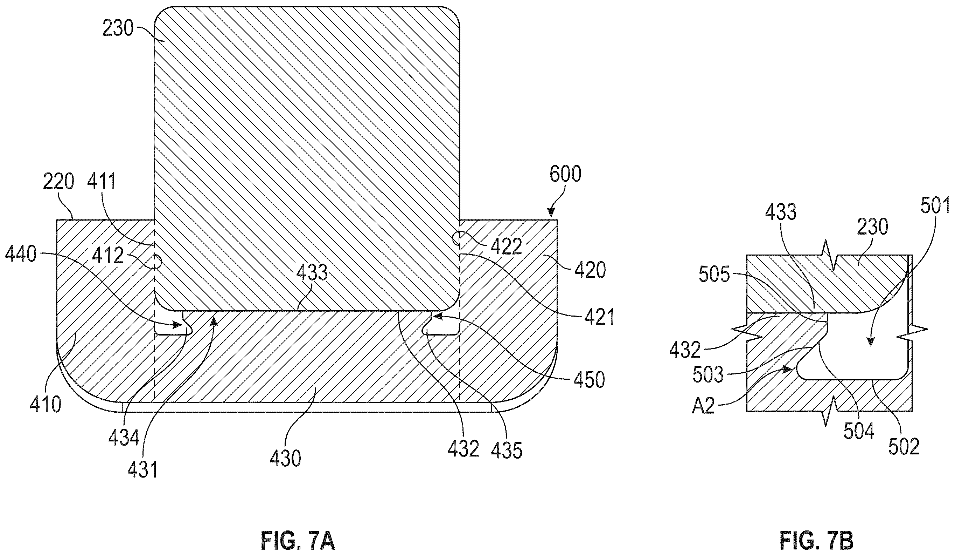

With continued reference to FIGS. 2 and 3 and with additional reference to FIGS. 6A and 6B and to FIGS. 7A and 7B, the inner race 220 can be provided as a multi-part inner race 600 in which the first outer portion 410, the second outer portion 420 and the central portion 430 are formed separately from one another and subsequently fixed together by at least one or more of fastening processes (i.e., using buts and bolts) and metallurgical bonding processes (i.e., electron beam welding, friction welding, field assisted sintering technology (FAST) processing, spark plasma sintering (SPS), etc.). A person of ordinary skill in the art would recognize that the multi-part inner race 600 is otherwise similar to the monolithic unitary body 400 of FIGS. 4A and 5A and a detailed description thereof is not needed.

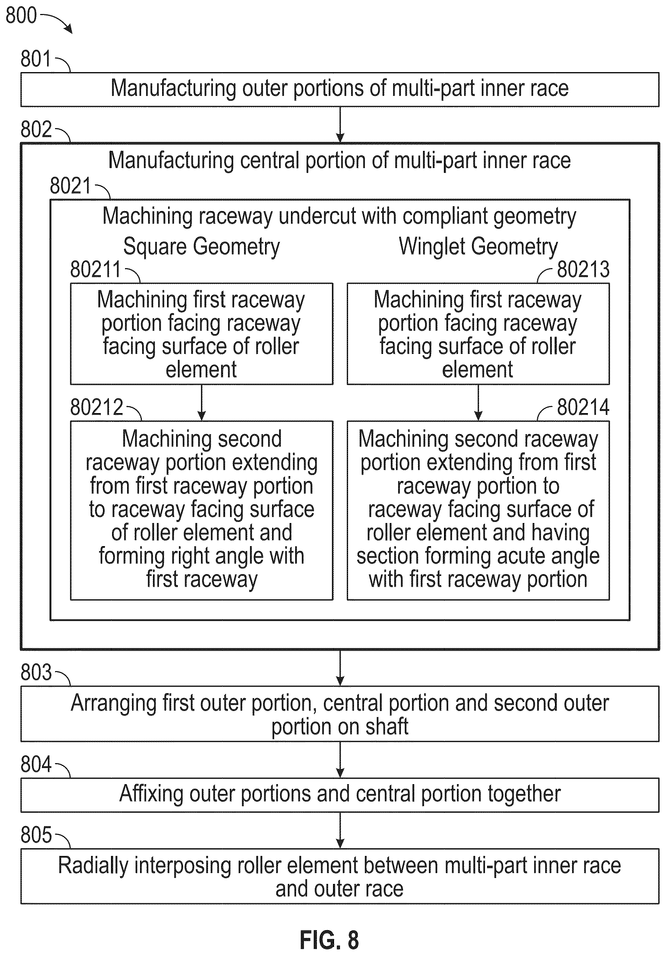

With reference to FIG. 8, a roller bearing assembly method 800 is provided and includes manufacturing outer portions of a multi-part inner race, such as the multi-part inner race 600 of FIGS. 6A and 6B and FIGS. 7A and 7B, to have axially facing surfaces to contact axially facing surfaces of a roller element (block 801) and manufacturing a central portion of the multi-part inner race to have a raceway to contact a raceway facing surface of the roller element under normal operating loads of the roller bearing and such that the raceway has a side proximate to one of the axially facing surfaces of the outer portions to contact the raceway facing surface of the roller element under ultimate operating loads of the roller bearing and such that the side of the raceway includes a raceway undercut with a compliant geometry deformable by the contact with the raceway facing surface of the roller element under the ultimate operating loads (block 802). The roller bearing assembly method 600 can further include arranging a first one of the outer portions on a shaft, the central portion on the shaft and a second one of the outer portions on the shaft (block 803), affixing the outer portions and the central portion together to form the multi-part inner race by at least one of fastening and metallurgical bonding (block 804) and radially interposing the roller element between the multi-part inner race and an outer race (block 805). As shown in FIG. 8, it is to be understood that the arranging of block 803 and the affixing of block 804 can be executed with the arranging of block 803 first and the affixing of block 804 second or vice versa with the affixing of block 804 executed first and the arranging of block 803 executed second.

In any case, the manufacturing of the central portion of block 802 can include machining the raceway undercut with the compliant geometry (block 8021). Where the compliant geometry is a square geometry, the machining of the raceway undercut with the compliant geometry of block 8021 can include at the side thereof machining a first raceway portion facing the raceway facing surface of the roller element (block 80211) and machining a second raceway portion extending from the first raceway portion to the raceway facing surface of the roller element and forming a right angle with the first raceway portion (block 80212). Where the compliant geometry is a winglet geometry, the machining of the raceway undercut with the compliant geometry of block 8021 can include machining a first raceway portion facing the raceway facing surface of the roller element (block 80213) and machining a second raceway portion extending from the first raceway portion to the raceway facing surface of the roller element and having a section forming an acute angle with the first raceway portion (block 80214).

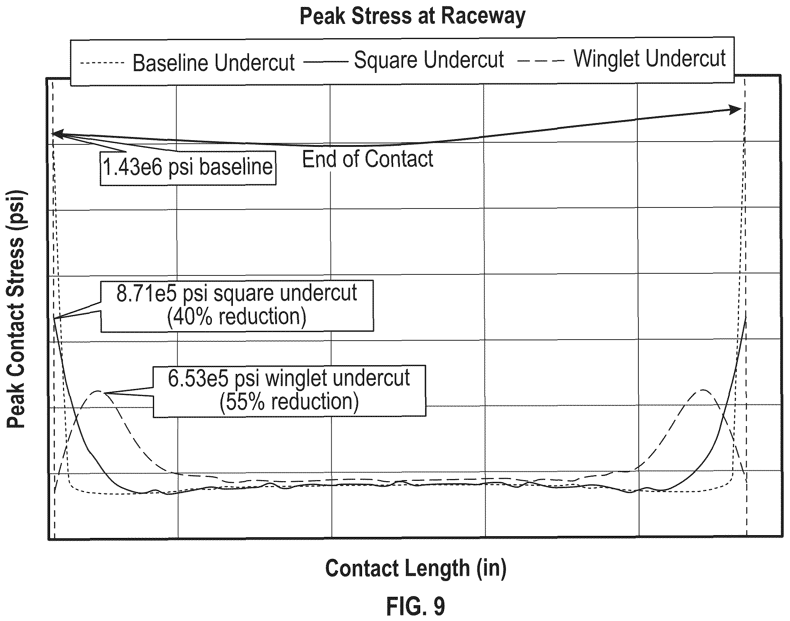

With reference back to FIGS. 2-7B and with additional reference to FIG. 9, advantages of the inner race 220 versus baseline/conventional designs are illustrated in terms of peak stresses at the raceway 431. As shown in FIG. 9, whereas peak stresses increase dramatically at the raceway undercut regions for the baseline/conventional designs, peak stresses are dramatically reduced at the raceway undercut regions for the raceway undercuts with the square geometry of FIGS. 4A, 4B, 6A and 6B and even more dramatically reduced at the raceway undercut regions for the raceway undercuts with the winglet geometry of FIGS. 5A, 5B, 7A and 7B.

Technical effects and benefits of the present disclosure are the provision of a roller bearing for use in a gas turbine engine of an aircraft for example. The roller bearing has an improved inner race geometry that leads to improved contact area performance during ultimate load cases and serves to optimize a weight of the roller bearing.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A roller bearing (201), comprising:
an outer race (210);
an inner race (220); and
a roller element (230) radially interposed between the outer race (210) and the inner race (220),
the inner race (220) comprising:
outer portions (410, 420) having axially facing surfaces (411, 421) to contact axially facing surfaces (412, 422) of the roller element (230); and
a central portion (430) disposed between the outer portions (410, 420) and having a raceway (431) to contact a raceway facing surface (433) of the roller element (230) under normal operating loads of the roller bearing (201),
the raceway (431) having a side (434, 435) proximate to one of the axially facing surfaces (411, 421) of the outer portions (410, 420) to contact the raceway facing surface (433) of the roller element (230) under ultimate operating loads of the roller bearing (201), and
the side (434, 435) of the raceway (431) comprising a raceway undercut (440, 450) with a compliant geometry deformable by contact with the raceway facing surface (433) of the roller element (230) under the ultimate operating loads.

2. The roller bearing (201) according to claim 1, wherein the outer portions (410, 420) and the central portion (430) of the inner race (220) are integrally formed as a monolithic unitary body (400).

3. The roller bearing (201) according to claim 1, wherein the inner race (220) is a multi-part inner race (600) and, optionally, the outer portions (410, 420) and the central portion (430) of the multi-part inner race (600) are formed separately and affixed together.

4. The roller bearing (201) according to claim 1, 2 or 3, wherein:
the raceway (431) has first and second opposite sides (434, 435), each of which is proximate to a corresponding one of the axially facing surfaces (411, 421) of a corresponding one of the outer portions (410, 420), and
each of the first and second opposite sides (434, 435) comprises the raceway undercut (440, 450) with the compliant geometry deformable by the contact with the raceway facing surface (433) of the roller element (230) under the ultimate operating loads.

5. The roller bearing (201) according to any preceding claim, wherein the compliant geometry is a square geometry (401).

6. The roller bearing (201) according to claim 5, wherein the square geometry (401) is **characterized in that** the raceway (431) comprises at the side (434, 435) thereof:
a first raceway portion (402) facing the raceway facing surface (433) of the roller element (230); and
a second raceway portion (403) extending from the first raceway portion (402) to the raceway facing surface (433) of the roller element (230) and forming a right angle (A1) or up to a right angle with the first raceway portion (402), and
wherein a material of the raceway (431) is softer than a material of the raceway facing surface (433) of the roller element (230).

7. The roller bearing (201) according to any of claims 1 to 4, wherein the compliant geometry is a winglet geometry (501).

8. The roller bearing (201) according to claim 7, wherein the winglet geometry (501) is **characterized in that** the raceway (431) comprises at the side (434, 435) thereof:
a first raceway portion (502) facing the raceway facing surface (433) of the roller element (230); and
a second raceway portion (503) extending from the first raceway portion (502) to the raceway facing surface (433) of the roller element (230) and having a section (504) forming an acute angle (A2) with the first raceway portion (402), and
wherein a material of the raceway (431) is softer than a material of the raceway facing surface (433) of the roller element (230).

9. A roller bearing (201) assembly method, comprising:
manufacturing outer portions (410, 420) of a multi-part inner race (600) to have axially facing surfaces (411, 421) to contact axially facing surfaces (412, 422) of a roller element (230); and
manufacturing a central portion (430) of the multi-part inner race (600) to have a raceway (431) to contact a raceway facing surface (433) of the roller element (230) under normal operating loads of the roller bearing (201) and such that:
the raceway (431) has a side (434, 435) proximate to one of the axially facing surfaces (411, 421) of the outer portions (410, 420) to contact the raceway facing surface (433) of the roller element (230) under ultimate operating loads of the roller bearing (201), and
the side (434, 435) of the raceway (431) comprises a raceway undercut (440, 450) with a compliant geometry deformable by the contact with the raceway facing surface (433) of the roller element (230) under the ultimate operating loads.

10. The roller bearing (201) assembly method according to claim 9, further comprising:
arranging a first one of the outer portions (410) on a shaft, the central portion (430) on the shaft and a second one of the outer portions (420) on the shaft;
affixing the outer portions (410, 420) and the central portion (430) together to form the multi-part inner race (600); and
radially interposing the roller element (230) between the multi-part inner race (600) and an outer race (210).

11. The roller bearing (201) assembly method according to claim 10, wherein the affixing of the outer portions (410, 420) and the central portion (430) together comprises at least one of fastening and metallurgical bonding.

12. The roller bearing (201) assembly method according to claim 9, 10 or 11, wherein at least the manufacturing of the central portion (430) comprises machining the raceway undercut (440, 450) with the compliant geometry.

13. The roller bearing (201) assembly method according to any of claims 9 to 12, wherein the compliant geometry is a square geometry (401) and the machining of the raceway undercut (440, 450) with the compliant geometry comprises at the side (434, 435) thereof:
machining a first raceway portion (402) facing the raceway facing surface (433) of the roller element (230); and
machining a second raceway portion (403) extending from the first raceway portion (402) to the raceway facing surface (433) of the roller element (230) and forming a right angle (A1) or up to a right angle with the first raceway portion (402), and
wherein a material of the raceway (431) is softer than a material of the raceway facing surface (433) of the roller element (230).

14. The roller bearing (201) assembly method according to any of claims 9 to 12, wherein the compliant geometry is a winglet geometry (501) and the machining of the raceway undercut (440, 450) with the compliant geometry comprises at the side (434, 435) thereof:
machining a first raceway portion (502) facing the raceway facing surface (433) of the roller element (230); and
machining a second raceway portion (503) extending from the first raceway portion (502) to the raceway facing surface (433) of the roller element (230) and having a section (504) forming an acute angle (A2) with the first raceway portion (502), and
wherein a material of the raceway (431) is softer than a material of the raceway facing surface (433) of the roller element (230).
